# EUROPEAN PATENT APPLICATION

(11) **EP 4 474 787 A1**
(43) Date of publication of application: **11.12.2024**
(21) Application number: 23823630.1
(22) Date of filing: 23.05.2023
(51) Int. Cl.: G01L 5/16

(54) **SHEAR FORCE SENSOR SHEET**

(30) Priority: 16.06.2022 JP 2022096981
(71) Applicant: NISSHA CO., LTD., Kyoto-shi, Kyoto 604-8551 (JP)
(72) Inventor: WATAZU Yuji, Kyoto-shi, Kyoto 604-8551 (JP)
(74) Representative: Hasegawa, Kan
(86) International application number: PCT/JP2023/019167
(87) International publication number: WO 2023/243330

(57) **Abstract**

A shear force sensor sheet has sufficiently high detection sensitivity independently of the Poisson's ratio of an elastic member. A shear force sensor sheet (1) includes lower detection electrodes (3), an elastic member (4), upper detection electrodes (5), an insulating layer (6), and a force concentrator (9) sequentially stacked on one another on a support substrate (2). The elastic member (4) and the insulating layer (6) are on a full surface of the support substrate (2). The lower detection electrodes (3) and the upper detection electrodes (5) are multiple strip electrodes located in a pressure-sensitive area (A1) on the elastic member, and are slidable to have a variable overlapping area between the upper strip electrodes and the lower strip electrodes. The force concentrator (9) includes at least protrusions (9a) corresponding to the upper detection electrodes (5).

## Description

### TECHNICAL FIELD

The present invention relates to a shear force sensor sheet for calculating a shear force in devices for measuring the contact states of, for example, tires, shoe soles, and track points.

### BACKGROUND

A known technique for measuring, for example, the contact state of a tire is described in Patent Literature 1. The structure with the technique includes, for example, a body having a surface to be contacted by a tire, a pressure sensor sheet located on the surface of the body and including multiple pressure measurement points, and a protective sheet covering the surface of the pressure sensor sheet. In the pressure sensor sheet, a resin is filled between first linear electrodes and second linear electrodes. The resin has an electrical resistance that decreases based on the degree of deformation of the resin when the resin is compressed.

The electrical resistance of the resin decreases in response to a greater force pressing the outer surface of the sheet. Thus, when the sheet is pressed at intersections of the first linear electrodes and the second linear electrodes in a plan view, the electrical resistances between the first linear electrodes and the second linear electrodes decrease. The electrical resistances are thus measured to measure a force acting on the resin at the intersections to obtain the shape of a contact surface contacted by a tire and contact pressure distribution.

However, the force acting on the resin at the intersections has a component in a Z-direction (a direction perpendicular to the linear electrodes) detectable, but has components in X- and Y-directions (a direction in which the tire moves being an X-axis, and a direction perpendicular to the X-axis being a Y-axis) not detectable. In other words, with the pressure sensor sheet with this structure, the contact pressure distribution in the Z-direction alone can be obtained, but, for example, the contact pressure distribution of stress (shear force) in the X- and Y- directions obliquely applied to the contact surface by the tire cannot be measured. Without being designed to measure the true state of contact between the tire and the contact surface, a device including the sensor sheet is thus insufficient as a test device for measuring the performance of, for example, tires.

The applicant of the present application thus devised a pressure sensor sheet (hereafter, a shear force sensor sheet) that can calculate, for a force obliquely applied onto the protective layer, the components in the X- and Y-directions (shear force) in addition to the component in the Z-direction (pressing force) and that includes, as a basic structure, an insulating layer that is an elastic member with predetermined features between first electrodes and second electrodes (Patent Literature 2).

More specifically, the shear force sensor sheet includes the first electrodes on a substrate, the elastic member with Poisson's ratio of 0 to 0.48 on the first electrodes, the second electrodes on the elastic member, and a protective layer on the second electrodes, and can calculate a shear force applied on the protective layer based on a change in capacitance.

### CITATION LIST

### PATENT LITERATURE

Patent Literature 1: Japanese Unexamined Patent Application Publication No. 2008-281403
Patent Literature 2: Japanese Unexamined Patent Application Publication No. 2020-46371

### BRIEF SUMMARY

### TECHNICAL PROBLEM

The shear force sensor sheet described in Patent Literature 2 usually also measures the component in the Z-direction (pressing force), and thus includes, as the elastic member, pieces of a foam material with a small Poisson's ratio easily deformable downward when pressed, which are bonded together with an adhesive. However, with the foam material not having a high dielectric constant, the shear force sensor sheet thus has low detection sensitivity.

The elastic member may simply include an adhesive layer with a higher dielectric constant than the foam material. However, the adhesive layer with an adhesive having a high Poisson's ratio does not deform downward easily when pressed. The shear force sensor sheet thus has low detection sensitivity.

In response to the above issue, one or more aspects of the present invention are directed to a shear force sensor sheet that has sufficiently high detection sensitivity independently of the Poisson's ratio of the elastic member.

### SOLUTION TO PROBLEM

In response to the above issue, aspects of the present invention are described below. Any of these aspects may be combined as appropriate.

A shear force sensor sheet according to an aspect of the present invention includes a support substrate, lower detection electrodes, an elastic member, upper detection electrodes, an insulating layer, and a force concentrator that are sequentially stacked on one another. The lower detection electrodes are a plurality of divided electrode parts and located in a pressure-sensitive area on the substrate. The elastic member is on a full surface of the support substrate on which the lower detection electrodes are located. The upper detection electrodes are a plurality of strip electrodes located in the pressure-sensitive area on the elastic member. The upper detection electrodes are slidable to have a variable overlapping area with the lower detection electrodes. The insulating layer is on a full surface of the elastic member on which the upper detection electrodes are located. The force concentrator is on the insulating layer. The force concentrator includes at least protrusions corresponding to the upper detection electrodes.

The shear force sensor sheet with this structure includes the force concentrator including the protrusions corresponding to the upper detection electrodes on its input surface, thus allowing a pressing force to concentrate on the upper detection electrodes. The shear force sensor sheet thus has sufficiently high detection sensitivity independently of the Poisson's ratio of the elastic member.

In the shear force sensor sheet described above, the lower detection electrodes may be, for example, a plurality of strip electrodes.

In the shear force sensor sheet described above, the force concentrator may include a base being sheet-like and the protrusions integral with the base. In the shear force sensor sheet with this structure, the force concentrator may have the base located downward.

In the shear force sensor sheet with this structure, the force concentrator is bonded with a large area of the base when laminated, thus enhancing the adhesion of the force concentrator.

In the shear force sensor sheet described above, the force concentrator may include only the protrusions.

The shear force sensor sheet with this structure has a smaller overall thickness by the thickness of the eliminated base.

In the shear force sensor sheet described above, the force concentrator may include a base being sheet-like and the protrusions integral with the base, and may have the protrusions located downward. In this case, the force concentrator defines an air layer in an area other than the protrusions under the base.

The shear force sensor sheet with this structure achieves surface flatness with the sheet-like base.

In the above structure including the air layer in the area other than the protrusions under the base, the base may have a vent above the air layer.

The shear force sensor sheet with this structure prevents adjacent protrusions, which are strip-shaped in a plan view, from coming in contact with each other when deforming and from sealing the air layer between the adj acent protrusions when a pressing force is applied.

In the shear force sensor sheet described above, the force concentrator may include a base being sheet-like and the protrusions integral with the base. The force concentrator may further include a cover being sheet-like, facing a surface of the base having the protrusions, and being integral with the protrusions. The shear force sensor sheet includes an air layer defined in an area other than the protrusions between the base and the cover being a front surface.

The shear force sensor sheet with this structure achieves surface flatness with the sheet-like cover.

In the structure including the air layer in the area other than the protrusions between the base and the cover, the cover may have a vent above the air layer.

The shear force sensor sheet with this structure also prevents adjacent protrusions, which are strip-shaped in a plan view, from coming in contact with each other when deforming and from sealing the air layer between the adjacent protrusions when a pressing force is applied.

In the shear force sensor sheet described above, the force concentrator may be formed from a material with an elastic modulus less than or equal to 100 MPa.

In the shear force sensor sheet with this structure, the force concentrator is not too rigid, and thus does not prevent the elastic member below the force concentrator from deforming downward.

In the shear force sensor sheet described above, the protrusions in the force concentrator may have a narrower width than the strip electrodes that are the upper detection electrodes.

In the shear force sensor sheet with this structure, any slight misalignment between the protrusions and the strip electrodes as the upper detection electrodes in laminating the force concentrator causes no change in the detection sensitivity. This increases the acceptance rate of the shear force sensor sheet.

In the shear force sensor sheet described above, the upper detection electrodes may be in a single layer, and the strip electrodes may be parallel to one another in a direction.

In the shear force sensor sheet described above, the elastic member may be formed from a gel material.

The shear force sensor sheet with this structure has the elastic member formed from the gel material with a high dielectric constant, and thus has higher detection sensitivity.

In the shear force sensor sheet described above, the upper detection electrodes may be in two layers. More specifically, of the upper detection electrodes, the strip electrodes in a first layer may be parallel to one another in a direction, the strip electrodes in a second layer may be parallel to one another in a direction intersecting with the strip electrodes in the first layer, and the strip electrodes in the first layer and the strip electrodes in the second layer together form a grid pattern. In the shear force sensor sheet with this structure, the lower detection electrodes are a plurality of island electrodes arranged with clearances between the plurality of divided electrodes, and the clearances define a grid pattern. The upper detection electrodes overlap the clearances between the lower detection electrodes and overlap opposite portions of the lower detection electrodes adjacent to the clearances. The shear force sensor sheet with this structure includes another insulating layer between the two layers of the upper detection electrodes.

### ADVANTAGEOUS EFFECTS

The shear force sensor sheet according to the above aspects of the present invention has sufficiently high detection sensitivity independently of the Poisson's ratio of the elastic member.

### BRIEF DESCRIPTION OF DRAWINGS

FIG. 1 is a cross-sectional view of a shear force sensor sheet according to a first embodiment of the present invention.
FIG. 2 is a top view of the shear force sensor sheet according to the first embodiment, showing an example positional relationship between electrodes and a force concentrator.
FIGS. 3A and 3B are each a cross-sectional view of the shear force sensor sheet according to one or more embodiments of the present invention, showing deformation when a pressing force is applied to the entire sheet from directly above.
FIG. 4 is a cross-sectional view of the shear force sensor sheet according to the first embodiment, showing a modification of the force concentrator.
FIG. 5 is a cross-sectional view of the shear force sensor sheet according to the first embodiment, showing another modification of the force concentrator.
FIG. 6 is a cross-sectional view of the shear force sensor sheet according to the first embodiment, showing another modification of the force concentrator.
FIG. 7 is a cross-sectional view of the shear force sensor sheet according to the first embodiment, showing another modification of the force concentrator.
FIG. 8 is a cross-sectional view of the shear force sensor sheet according to the first embodiment, showing another modification of the force concentrator.
FIGS. 9A and 9B are each a top view of the shear force sensor sheet according to the first embodiment, showing an example force concentrator with vents.
FIG. 10 is a cross-sectional view of a shear force sensor sheet according to a second embodiment of the present invention.
FIG. 11 is a top view of the shear force sensor sheet according to the second embodiment, showing an example positional relationship between electrodes and a force concentrator.
FIGS. 12A and 12B are each a top view of the shear force sensor sheet according to the second embodiment, showing an example force concentrator with vents.

### DETAILED DESCRIPTION

### First Embodiment

A first embodiment of the present invention will now be described with reference to the drawings.

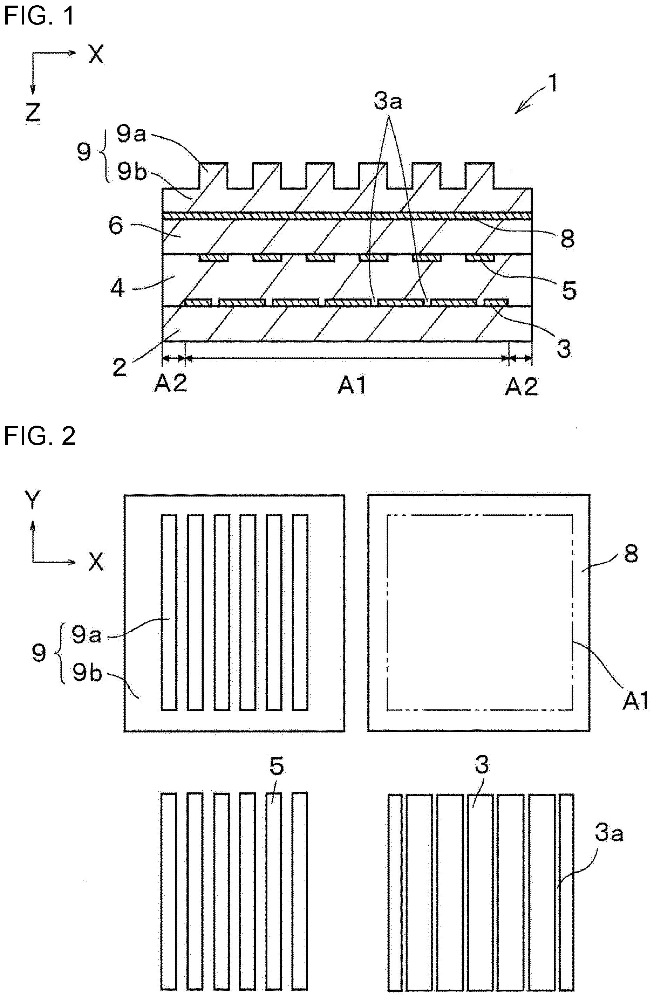

A shear force sensor sheet 1 according to the first embodiment includes a support substrate 2, lower detection electrodes 3, an elastic member 4, upper detection electrodes 5, an insulating layer 6, a shield electrode 8, and a force concentrator 9 that are sequentially stacked on one another (refer to FIG. 1).

The lower detection electrodes 3 in the present embodiment are multiple divided electrode parts and located in a pressure-sensitive area A1 on the support substrate 2. The elastic member 4 is on the full surface of the support substrate 2 on which the lower detection electrodes 3 are located. The upper detection electrodes 5 are multiple strip electrodes located in the pressure-sensitive area A1 on the elastic member (refer to FIGS. 1 and 2). The insulating layer 6 is on the full surface of the elastic member 4 on which the upper detection electrodes 5 are located. In the example shown in FIGS. 1 and 2, the upper detection electrodes 5 are six parallel strip electrodes extending in a Y-direction, and the lower detection electrodes 3 are seven parallel strip electrodes extending in the Y-direction.

The upper detection electrodes 5 overlap the clearances 3a between the lower detection electrodes 3 and overlap opposite portions of the lower detection electrodes 3 adjacent to the clearances 3a. In other words, the upper detection electrodes 5 have a width greater than the clearances 3a between the lower detection electrodes 3.

This stack allows detection of a pressing force and a shear force applied through the force concentrator 9 in the shear force sensor sheet 1.

For example, the shear force sensor sheet 1 may be pressed (a shear force may be generated) in a positive X-direction intersecting with the multiple strip electrodes as the upper detection electrodes 5. In this case, the strip electrodes as the upper detection electrodes 5 move in a positive Z-direction and the positive X-direction based on the magnitude of the pressure.

In this case, the mutual capacitance of a portion between each of the strip electrodes as the upper detection electrodes 5 and the corresponding one of the strip electrodes 3 as the lower detection electrodes overlapping each other changes based on Δx. The shear force in the positive X-direction is detectable based on the change in the capacitance of the shear force sensor sheet 1 being pressed in the positive X-direction.

The mutual capacitance of a portion between each of the strip electrodes as the upper detection electrodes 5 and the corresponding one of the strip electrodes 3 as the lower detection electrodes overlapping each other changes based on Δz. The pressing force in the positive Z-direction is detectable based on the change in the capacitance of the shear force sensor sheet 1 being pressed in the positive Z-direction.

The shield electrode 8 is located fully on the insulating layer 6. When any electromagnetic field shielding is to be used against strong radio-frequency (RF) noise (electromagnetic noise in the radio frequency band) in the use environment of a product incorporating the shear force sensor sheet 1 or such RF noise from inside the product, the shield electrode 8 protects the upper detection electrodes 5 and the lower detection electrodes 3 in the pressure-sensitive area A1 and wiring (not shown) in a wiring area A2 electrically connected to the upper detection electrodes 5 and the lower detection electrodes 3 and surrounding the pressure-sensitive area A1 to prevent erroneous detection resulting from noise. The shield electrode 8 may be eliminated from the shear force sensor sheet 1. The wiring (not shown) in the wiring area A2 is electrically connected to an external controller.

The force concentrator 9 shown in FIGS. 1 and 2 is located fully on the shield electrode 8. The force concentrator 9 includes a sheet-like base 9b and protrusions 9a integral with the base 9b and corresponding to the upper detection electrodes 5. In the example shown in FIGS. 1 and 2, the upper detection electrodes 5 are six parallel strip electrodes. The corresponding protrusions 9a in the force concentrator 9 are also six parallel strip-shaped protrusions. The protrusions 9a in the force concentrator 9 are strips having the same length and width as the strip electrodes as the upper detection electrodes 5 in a plan view. Each protrusion 9a completely overlaps the corresponding one of the strip electrodes as the upper detection electrodes 5.

The force concentrator 9 shown in FIGS. 1 and 2 has the base 9b located downward. With the base 9b located downward, the force concentrator 9 is bonded to the shield electrode 8 with a large area of the base 9b when laminated, thus enhancing the adhesion of the force concentrator 9.

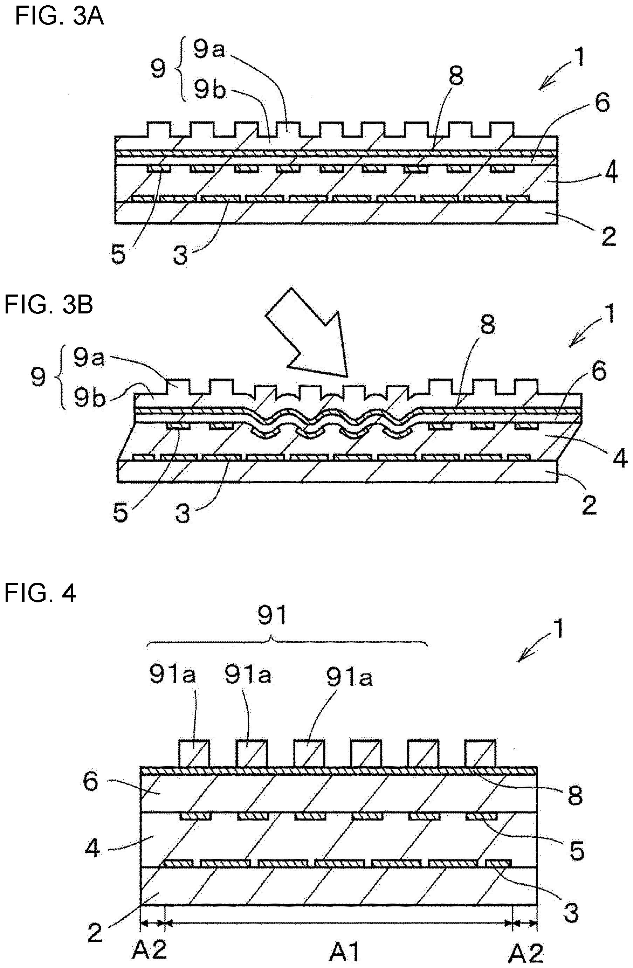

When a pressing force is applied to generate a shear force through the force concentrator 9 including the protrusions 9a corresponding to the upper detection electrodes 5, the protrusions 9a alone receive the pressing force. Thus, when the elastic member 4 has a high Poisson's ratio, the elastic member 4 deforms horizontally, and its portions under the protrusions 9a in a pressed area alone intensively deform downward, as shown in FIGS. 3A and 3B (FIG. 3A shows a state before a pressing force is applied, and FIG. 3B shows a state when a pressing force is being applied. In FIG. 3B, the arrow indicates the pressing force being applied to four of the protrusions shown in the cross-sectional view). The portions of the elastic member 4 other than the portions under the protrusions 9a in the pressed area are raised (protrude upward). The strip electrodes as the upper detection electrodes 5 are located on the portions of the elastic member 4 that deform downward, thus allowing a pressing force Fz to be detected as an increase in capacitance. For ease of understanding of deformation and downward deformation of, for example, the elastic member 4, FIGS. 3A and 3B show the protrusions 9a changed in the number and the dimensions from those in FIGS. 1 and 2.

When the upper detection electrodes 5 are fully located, in other words, when the upper detection electrodes 5 are also located on the portions other than the portions under the protrusions 9a, capacitance change in the portions that deform downward and capacitance change in the portions that are raised cancel each other. This does not allow detection of capacitance change caused by the pressing force Fz.

The support substrate 2 may have any shape. In the example shown in FIG. 2, the substrate 2 is square.

The support substrate 2 may be formed from any material that is more rigid than the materials for the insulating layer 6 and the force concentrator 9. Examples of the material for the support substrate 2 include a sheet formed from a resin such as polyethylene terephthalate (PET), polyimide, or polycarbonate or glass. The support substrate 2 may have a thickness of 0.02 to 1 mm.

The material for the upper detection electrodes 5 and the lower detection electrodes 3 may have a surface resistance (conductivity) of several milliohms to several hundred milliohms. The material may be, for example, a film of a metal oxide, such as indium oxide, tin oxide, indium tin oxide (ITO), or antimony tin oxide, or a metal, such as gold, silver, copper, platinum, palladium, aluminum, or rhodium. Examples of a method for forming the upper detection electrodes 5 and the lower detection electrodes 3 formed from the material described above include forming a transparent conductive film by, for example, physical vapor deposition (PVD), such as sputtering, vacuum deposition, or ion plating, chemical vapor deposition (CVD), or coating, and then performing patterning by etching, and a printing method.

In the above structure, the elastic member 4 deformable in response to stress from an input surface is between the upper detection electrodes 5 and the lower detection electrodes 3. Thus, stress from the input surface displaces the upper detection electrodes 5 relative to the lower detection electrodes 3.

The elastic member 4 is deformable when receiving a force.

Examples of the material for the elastic member 4 include silicone, acrylic, urethane, olefinic, and other elastic gel sheets, other elastic resin sheets, and a stretchable nonwoven fabric sheet. Specifically, the material may be a gel sheet with low elasticity and a high dielectric constant. More specifically, the material may be a silicone gel sheet with high heat resistance. A gel sheet is adhesive and can bond the support substrate 2 and the insulating layer 6 together without another adhesive.

For example, foam materials may be used as the other elastic resin sheets. The gel sheets have a higher dielectric constant than the foam materials and can thus achieve a higher detection sensitivity.

The elastic member 4 may be a coating layer formed by printing or coating, rather than a sheet formed with a known sheet forming method such as extrusion molding. In this case, the elastic member 4 may have a thickness appropriately determined within the range of 20 µm to 2 mm.

The insulating layer 6 is a layer to form the upper detection electrodes 5.

Examples of the material for the insulating layer 6 include, but are not limited to, a thermoplastic or thermosetting resin sheet of, for example, acrylic, urethane, fluorine, polyester, polycarbonate, polyacetal, polyamide, olefin, silicone rubber, or urethane, and an ultraviolet curable resin sheet of, for example, cyanoacrylate. The sheet used for the insulating layer 6 may have a thickness of 0.02 to 0.2 mm.

The shield electrode 8 may be formed from the same material and with the same method as the upper detection electrodes 5 and the lower detection electrodes 3. Silver paste may also be used as the material for the shield electrode 8.

Examples of the material for the force concentrator 9 include a silicone rubber sheet and a urethane rubber sheet. Specifically, the material may have an elastic modulus less than or equal to 100 MPa. The force concentrator 9 formed from a material with an elastic modulus exceeding 100 MPa may be too rigid, and thus prevent the elastic member 4 below the force concentrator 9 from deforming downward.

The base 9b and the protrusions 9a may be formed from different materials.

For the force concentrator 9 including the base 9b and the protrusions 9a formed from the same material, the protrusions 9a may be formed by compression molding using a millable material or by injection molding using a liquid rubber material or a thermoplastic elastomer. For the base 9b and the protrusions 9a formed from different materials, the protrusions 9a may be formed by printing or applying, with a dispenser, a liquid rubber material on the base 9b formed into a sheet with a common sheet forming method such as extrusion molding. The base 9b in the force concentrator 9 may have a thickness of 0.1 to 1 mm.

The protrusions 9a in the force concentrator 9 may have a height of 0.05 to 2 mm. For the protrusions 9a with a height less than 0.05 mm, the difference in height between the protrusions 9a and the portion other than the protrusions 9a is small. This may thus deteriorate the function of concentrating a pressing force on the upper detection electrodes 5. For the protrusions 9a with a height greater than 2 mm, a pressing object may be caught by the protrusions 9a and break the protrusions 9a easily, or the protrusions 9a may be difficult to form. More specifically, the protrusions 9a may have a height of 0.1 to 0.5 mm.

The protrusions 9a corresponding to the upper detection electrodes 5 herein have as sufficient spaces between them as the multiple strip electrodes that are the upper detection electrodes 5. In other words, these spaces are not cuts.

Although the shear force sensor sheet 1 according to the first embodiment has been described above, the shear force sensor sheet 1 may have any of the structures in modifications described below.

### Modification 1

In the shear force sensor sheet 1 shown in FIGS. 1, 2, and 3, the protrusions 9a in the force concentrator 9 have the same width as the strip electrodes, which are the upper detection electrodes 5, but the first embodiment is not limited to this. For example, in the shear force sensor sheet 1 according to the first embodiment, the protrusions 9a in the force concentrator 9 may have a narrower width than the strip electrodes as the upper detection electrodes 5.

In this structure, any slight misalignment between the protrusions 9a and the strip electrodes, which are the upper detection electrodes 5, in laminating the force concentrator 9 causes no change in the detection sensitivity of the shear force sensor sheet 1. This increases the acceptance rate of the shear force sensor sheet 1.

### Modification 2

In the shear force sensor sheet 1 shown in FIGS. 1, 2, and 3, the force concentrator 9 includes the protrusions 9a integral with the sheet-like base 9b, but the first embodiment is not limited to this. For example, the shear force sensor sheet 1 according to the first embodiment may include a force concentrator 91 including protrusions 91a alone (refer to FIG. 4).

This structure can reduce the overall thickness of the shear force sensor sheet 1 by the thickness of the eliminated base 9b.

In this case, without the base 9b in the force concentrator 9, the insulating layer 6 alone protects the upper detection electrodes 5.

### Modification 3

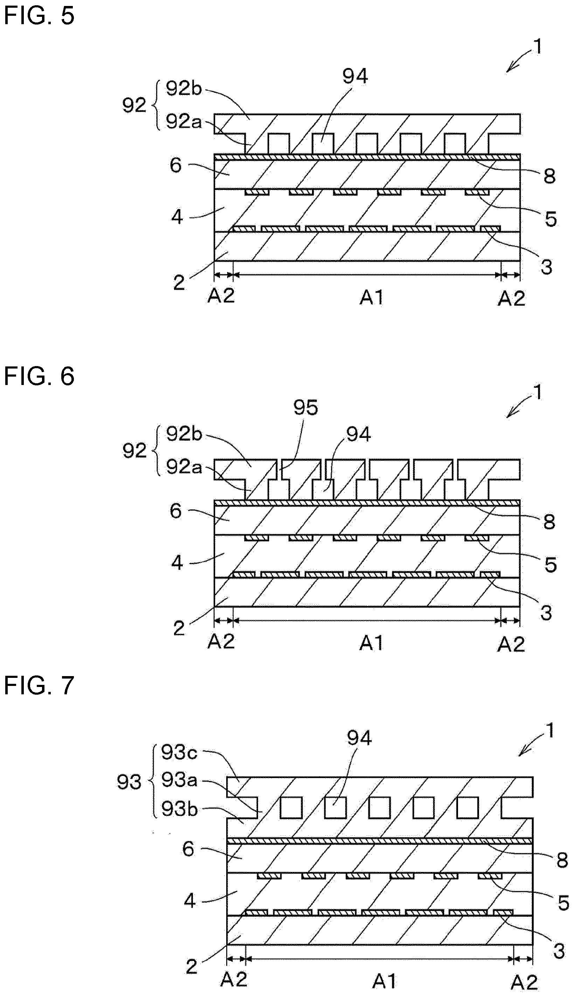

In the shear force sensor sheet 1 shown in FIGS. 1, 2, and 3, the force concentrator 9 includes the protrusions 9a integral with the sheet-like base 9b and has the base 9b located downward, but the first embodiment is not limited to this. For example, the shear force sensor sheet 1 according to the first embodiment may include a force concentrator 92 including a sheet-like base 92b and protrusions 92a integral with the base 92b, have the protrusions 92a located downward, and define air layers 94 in areas other than the protrusions 92a under the base 92b (refer to FIG. 5).

This structure achieves surface flatness with the sheet-like base 9b. The force concentrator 92 having a flat surface can transmit a pressing force to the protrusions 92a when portions other than the portions above the protrusions 92a in the force concentrator 92 are pressed.

### Modification 4

The force concentrator 92 in Modification 3 may further have, in the base 92b, vents 95 above the air layers 94 (refer to FIG. 6).

This structure prevents adjacent protrusions 92a, which are strip-shaped in a plan view, from coming in contact with each other when deforming and from sealing the air layer 94 between the adjacent protrusions 92a when a pressing force is applied. When a pressing force is further applied with the adjacent protrusions 92a sealing the air layer 94 and the air in the air layer 94 is compressed beyond its limit, the air forced to escape may break the force concentrator 92.

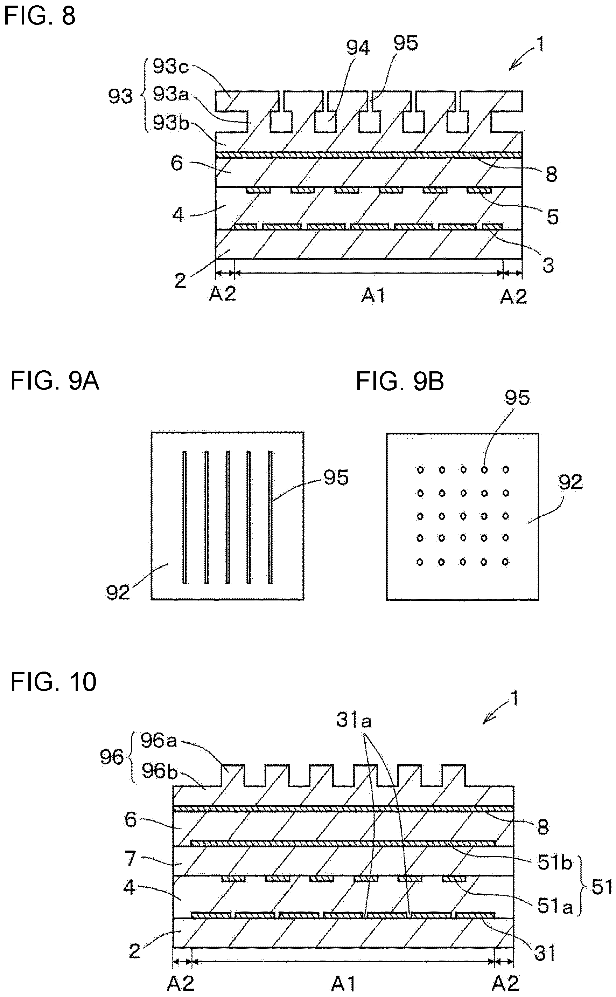

The vents 95 in the base 92b may have any shape. For example, the vents 95 may be elongated slots (refer to FIG. 9A) each of which extends above and along the corresponding air layer 94 between adjacent protrusions 92a that are strip-shaped in a plan view. The vents 95 may be multiple perfect circles (refer to FIG. 9B) or regular polygons such as equilateral triangles, regular quadrilaterals (squares), regular pentagons, or regular hexagons that are lined up above and along the air layers 94 between the protrusions 92a that are strip-shaped in a plan view. The vents 95 may be a combination of these.

### Modification 5

The shear force sensor sheet 1 according to the first embodiment may include a force concentrator 93. The force concentrator 93 may include a sheet-like base 93b, protrusions 93a integral with the base 93b, a sheet-like cover 93c that faces the surface of the base 93b having the protrusions 93a and is integral with the protrusions 93a, and air layers 94 in areas other than the protrusions 93a between the base 93b and the cover 93c that is a front surface (refer to FIG. 7).

This structure achieves surface flatness with the sheet-like cover 93c. Compared with the force concentrator 92 in Modification 3, the force concentrator 93 is bonded with the entire base 93b instead of the protrusions 93a alone when laminated, and is thus bonded more firmly.

### Modification 6

In Modification 6, the force concentrator 93 may further have, in the cover 93c, the vents 95 above the air layers 94 (refer to FIGS. 8 and 9).

This structure prevents adjacent protrusions 93a that are strip-shaped in a plan view from deforming and sealing the air layer 94 between the adjacent protrusions 93a when a pressing force is applied, as in Modification 4.

The vents 95 in the cover 93c may have any shape. For example, the vents 95 may be elongated slots each of which extends above and along the corresponding air layer 94 between adjacent protrusions 93a that are strip-shaped in a plan view, as in Modification 4. The vents 95 may be multiple perfect circles or regular polygons such as equilateral triangles, regular quadrilaterals (squares), regular pentagons, or regular hexagons that are lined up above and along the air layers 94 between the protrusions 93a that are strip-shaped in a plan view, as in Modification 4. The vents 95 may be a combination of these.

### Other Modifications

The first embodiment and its modifications are not limited to the above. For example, any number of strip electrodes as the upper detection electrodes 5 or the lower detection electrodes 3, other than the number of strip electrodes in the above examples, may be used. The strip electrodes as the upper detection electrodes 5 or the lower detection electrodes 3 may not be parallel to one another. The strip electrodes as the upper detection electrodes 5 or the lower detection electrodes 3 may have any width. Further, the lower detection electrodes 3 may overlap the clearances between the upper detection electrodes 5 and overlap opposite portions of the upper detection electrodes 5 adjacent to the clearance.

### Second Embodiment

A second embodiment of the present invention will now be described with reference to the drawings.

The upper detection electrodes 5 are in a single layer in the first embodiment, but the shear force sensor sheet 1 according to one or more embodiments of the present invention is not limited to this. For example, the shear force sensor sheet 1 may include the upper detection electrodes 51 in two layers (second embodiment).

As in the first embodiment, a shear force sensor sheet 1 according to the second embodiment includes the support substrate 2, lower detection electrodes 31, the elastic member 4, upper detection electrodes 51, the insulating layer 6, the shield electrode 8, and a force concentrator 96 that are sequentially stacked on one another (refer to FIG. 10), but differs from the shear force sensor sheet 1 according to the first embodiment as described below.

As described above, the upper detection electrodes 51 are in two layers. Of the upper detection electrodes 51 in two layers, the strip electrodes in a first layer (hereafter referred to as first upper detection electrodes 51a) are parallel to one another in a direction. The strip electrodes in a second layer (hereafter referred to as second upper detection electrodes 5 1b) are parallel to one another in a direction intersecting with the strip electrodes as the first upper detection electrodes 51a. The first upper detection electrodes 51a and the second upper detection electrodes 51b in the two layers together form a grid pattern. Another insulating layer 7 is between the two layers of the upper detection electrodes 51.

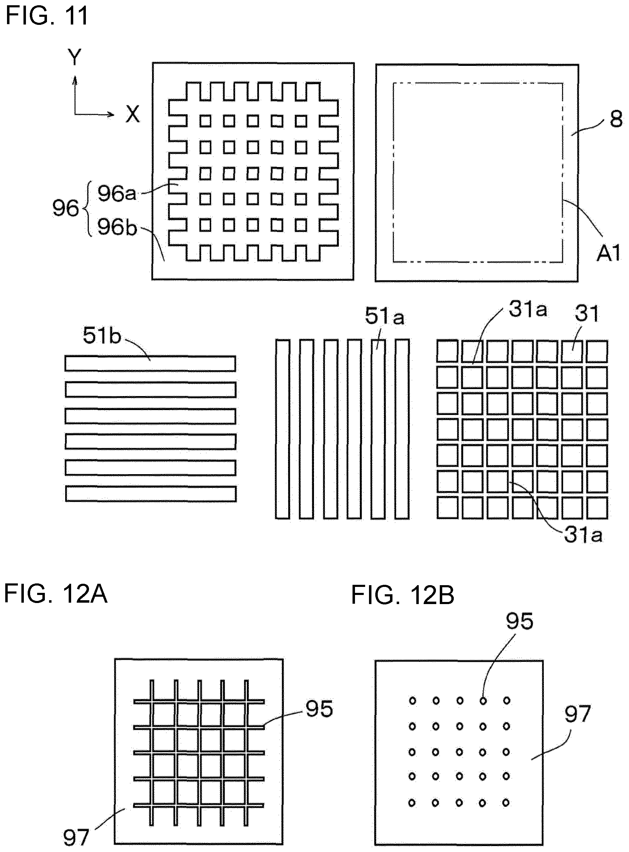

In the example shown in FIGS. 10 and 11, the first upper detection electrodes 51a are six parallel strip electrodes extending in the Y-direction, and the second upper detection electrodes 51b are six parallel strip electrodes extending in the X-direction. The strip electrodes in one of the layers are orthogonal to the electrodes in the other layer to form the grid pattern. The pattern formed by the first upper detection electrodes 51a and the second upper detection electrodes 51b is not limited to the above.

In the second embodiment, the lower detection electrodes 31 are not strip electrodes as in the first embodiment, and are multiple island electrodes arranged in the pressure-sensitive area A1. Clearances 31a between the island electrodes form a grid pattern (refer to FIG. 11). In other words, the lower detection electrodes 31 are in a matrix. In the illustrated example, each island electrode is square.

The upper detection electrodes 51 overlap the clearances 31a between the lower detection electrodes 31 and overlap opposite portions of the lower detection electrodes 31 adj acent to the clearances 31a. In other words, the first upper detection electrodes 51a and the second upper detection electrodes 51b have a width greater than the clearances 3 1a between the lower detection electrodes 31.

The island electrodes as the lower detection electrodes 31 may not be square based on the arrangement of the first upper detection electrodes 51a and the second upper detection electrodes 51b, or for example, the spacing or the angle of intersections between the strip electrodes. The island electrodes may be in any other shape, such as rectangular or rhombic.

When stress is applied to the input surface in the positive X-direction, the first upper detection electrodes 51a and the second upper detection electrodes 51b move in the positive X-direction relative to the lower detection electrodes 31 to have overlapping areas with the lower detection electrodes 31 that vary accordingly. This increases mutual capacitance of an overlapping portion adjacent to one end of each of the clearances 31a extending in the Y-direction between the lower detection electrodes 31, but reduces capacitance of an overlapping portion adjacent to the other end. In contrast, capacitance of an overlapping portion adjacent to one end of each of the clearances 31a extending in the X-direction between the lower detection electrodes 31 and capacitance of an overlapping portion adjacent to the other end do not change.

When stress is applied to the input surface in the positive Y-direction, the first upper detection electrodes 51a and the second upper detection electrodes 51b move in the positive Y-direction relative to the lower detection electrodes 31 to have the overlapping areas with the lower detection electrodes 31 that vary accordingly. This increases mutual capacitance of the overlapping portion adjacent to one side of each of the clearances 31a extending in the X-direction between the lower detection electrodes 31, but reduces capacitance of the overlapping portion adjacent to the other side. In contrast, capacitance of the overlapping portion adjacent to one side of each of the clearances 31a extending in the Y-direction between the lower detection electrodes 31 and capacitance of the overlapping portion adjacent to the other side do not change.

As described above, the movement in the X- and Y- directions can be detected by measuring the capacitance of the four overlapping portions described above. This allows detection of shear stress.

The force concentrator 96 shown in FIGS. 10 and 11 is located fully on the shield electrode 8. The force concentrator 96 includes a sheet-like base 96b and protrusions 96a integral with the base 96b and corresponding to the upper detection electrodes 51. The protrusions 96a in the force concentrator 96 shown in FIGS. 10 and 11 are strips with the same length and width as the strip electrodes as the upper detection electrodes 5 in a plan view, and completely overlap the grid pattern of the upper detection electrodes 51.

The force concentrator 96 in the present embodiment has a different shape from the force concentrator 9 in the first embodiment in a plan view, but has the same function as the force concentrator 9 in the first embodiment.

The upper detection electrodes 51 and the lower detection electrodes 31 may be formed from the same material and with the same method as the upper detection electrodes 5 and the lower detection electrodes 3 in the first embodiment.

The insulating layer 7 between the first upper detection electrodes 51a and the second upper detection electrodes 51b may be formed from the same material and with the same method as the insulating layer 6 in the first embodiment.

The other components are the same as those in the first embodiment and will not be described.

The modifications of the first embodiment are applicable to the second embodiment. For Modifications 4 and 6, the upper detection electrodes 51 in the second embodiment are in two layers including the first upper detection electrodes 51a and the second upper detection electrodes 51b intersecting with each other, and thus, a force concentrator 97 has one or more vents 95 in a shape slightly different from the shape of the vents 95 in the first embodiment.

In other words, in modifications of the second embodiment corresponding to Modifications 4 and 6 of the first embodiment, the vents 95 in the base or the cover may be, for example, slits forming a grid pattern (refer to FIG. 12A), which resembles skewers crisscrossing one another, above the air layers 94 in a grid surrounded by the protrusions that are in a grid pattern in a plan view. The vents 95 may be perfect circles (refer to FIG. 12B) or regular polygons such as equilateral triangles, regular quadrilaterals (squares), regular pentagons, or regular hexagons that are in a grid above the air layers 94 in a grid surrounded by the protrusion that are in a grid pattern in a plan view. The vents 95 may be a combination of these.

Although embodiments of the present invention have been described, the present invention is not limited to the embodiments, and may be changed in various manners without departing from the spirit and scope of the present invention. The embodiments and modifications described herein can be combined in any manner as appropriate.

### REFERENCE SIGNS LIST

1 shear force sensor sheet
2 support substrate
3, 31 lower detection electrode
3a, 31a clearance
4 elastic member
5, 51 upper detection electrode
51a first upper detection electrode
51b second upper detection electrode
6, 7, 10 insulating layer
8 shield electrode
9, 91, 92, 93, 96, 97 force concentrator
9a, 91a, 92a, 93a, 96aprotrusion
9b, 92b, 93b, 96b base
92c, 93dcover
94 air layer
95 vent
A1 pressure-sensitive area
A2 wiring area

## Claims

1. A shear force sensor sheet, comprising:
a support substrate;
lower detection electrodes being a plurality of divided electrode parts and located in a pressure-sensitive area on the support substrate;
an elastic member on a full surface of the support substrate on which the lower detection electrodes are located;
upper detection electrodes being a plurality of strip electrodes located in the pressure-sensitive area on the elastic member, the upper detection electrodes being slidable to have a variable overlapping area with the lower detection electrodes;
an insulating layer on a full surface of the elastic member on which the upper detection electrodes are located; and
a force concentrator on the insulating layer, the force concentrator including at least protrusions corresponding to the upper detection electrodes.

2. The shear force sensor sheet according to claim 1, wherein
the lower detection electrodes are a plurality of strip electrodes.

3. The shear force sensor sheet according to claim 1 or claim 2, wherein
the force concentrator includes a base being sheet-like and the protrusions integral with the base, and the force concentrator has the base located downward.

4. The shear force sensor sheet according to claim 1 or claim 2, wherein
the force concentrator includes only the protrusions.

5. The shear force sensor sheet according to claim 1 or claim 2, wherein
the force concentrator includes a base being sheet-like and the protrusions integral with the base, the force concentrator has the protrusions located downward and defines an air layer in an area other than the protrusions under the base.

6. The shear force sensor sheet according to claim 5, wherein
the base has a vent above the air layer.

7. The shear force sensor sheet according to claim 1 or claim 2, wherein
the force concentrator includes a base being sheet-like and the protrusions integral with the base, the force concentrator includes a cover being sheet-like, facing a surface of the base having the protrusions, and being integral with the protrusions, and the force concentrator defines an air layer in an area other than the protrusions between the base and the cover being a front surface.

8. The shear force sensor sheet according to claim 7, wherein
the cover has a vent above the air layer.

9. The shear force sensor sheet according to claim 1 or claim 2, wherein
the force concentrator comprises a material with an elastic modulus less than or equal to 100 MPa.

10. The shear force sensor sheet according to claim 1 or claim 2, wherein
the protrusions in the force concentrator have a narrower width than the plurality of strip electrodes being the upper detection electrodes.

11. The shear force sensor sheet according to claim 1 or claim 2, wherein
the upper detection electrodes are in a single layer, and the plurality of strip electrodes are parallel to one another in a direction.

12. The shear force sensor sheet according to claim 1 or claim 2, wherein
the elastic member comprises a gel material.

13. The shear force sensor sheet according to claim 1, wherein
the upper detection electrodes are in two layers, strip electrodes of the plurality of strip electrodes in a first layer are parallel to one another in a direction, strip electrodes of the plurality of strip electrodes in a second layer are parallel to one another in a direction intersecting with the strip electrodes of the plurality of strip electrodes in the first layer, and the strip electrodes in the first layer and the strip electrodes in the second layer together form a grid pattern,
the lower detection electrodes are a plurality of island electrodes arranged with clearances between the plurality of island electrodes, and the clearances define a grid pattern,
the upper detection electrodes overlap the clearances between the lower detection electrodes and overlap opposite portions of the lower detection electrodes adjacent to the clearances, and
the shear force sensor sheet further comprises another insulating layer between the two layers of the upper detection electrodes.
